# EUROPÄISCHE PATENTSCHRIFT

(11) **EP 2 536 596 B1**
(45) Veröffentlichungstag und Bekanntmachung des Hinweises auf die Patenterteilung: **21.05.2014**
(21) Anmeldenummer: 11701946.3
(22) Anmeldetag: 26.01.2011
(51) Int. Cl.: B60R 21/213, F16B 21/08, B60R 21/20

(54) **BEFESTIGUNGSANORDNUNG ZUR BEFESTIGUNG EINES BAUTEILS AN EINER TRÄGERWAND SOWIE BEFESTIGUNGSELEMENT HIERFÜR**
FASTENING ASSEMBLY FOR FASTENING A COMPONENT TO A SUPPORT WALL AND FASTENING ELEMENT THEREFOR
ARRANGEMENT DE FIXATION POUR FIXER UN COMPOSANT SUR UNE PAROI PORTEUSE ET ÉLÉMENT DE FIXATION À CET EFFET

(30) Priorität: 16.02.2010 DE 102010008158
(43) Veröffentlichungstag der Anmeldung: 26.12.2012
(73) Patentinhaber: Volkswagen AG, 38436 Wolfsburg (DE)
(72) Erfinder: GRABOWSKI, Martin, 31234 Rietze (DE); FRIESE, Oliver, 38527 Meine (DE)
(86) Internationale Anmeldenummer: PCT/EP2011/000338
(87) Internationale Veröffentlichungsnummer: WO 2011/101080

(56) Entgegenhaltungen:
- EP-A2- 1 584 521
- WO-A1-2006/026956
- WO-A1-2008/028646
- DE-U1-202007 004 549
- US-A1- 2007 158 931
- US-A1- 2008 084 050

## Beschreibung

Die Erfindung betrifft eine Befestigungsanordnung zur Befestigung eines Bauteils, insbesondere eines Airbags, an einer Fahrzeug-Trägerwand nach dem Oberbegriff des Patentanspruches 1 sowie ein Befestigungselement zur Verwendung in einer solchen Befestigungsanordnung nach dem Patentanspruch 10.

Derartige Befestigungsanordnungen können zur Befestigung eines in Rollfaltung oder Z-Faltung vorgesehenen Kopfairbags am Übergangsbereich von Fahrzeugseitenwand zum Fahrzeugdach eingesetzt werden. Hierzu wird eine Stofflasche des Kopfairbags mittels des Befestigungselementes an einem Karosserieteil des Fahrzeugs befestigt.

Aus der DE 10 2006 011 836 B3 ist eine Befestigungsanordnung bekannt, bei der das Befestigungselement ein Kopfteil sowie ein Schaftteil aufweist. Das Schaftteil ist mit Schaftarmen ausgebildet, die im eingebauten Zustand eine Befestigungslasche des Airbags sowie eine Montageöffnung der Trägerwand durchsetzen und den Rand der Montageöffnung hintergreifen. Gleichartige Befestigungsanordnungen sind auch aus der WO 2006/026956 A1 und aus der WO 2008/028646 A1 bekannt.

Aus der US 2008/0084050 A1 ist eine gattungsgemäße Befestigungsanordnung bekannt. Die Befestigungsanordnung weist ein Kopfteil und ein Schaftteil auf, das mit Schaftarmen eine Airbag-Befestigungslasche sowie eine Trägerwand-Montageöffnung durchsetzt und den Rand der Montageöffnung hintergreift. Die Schaftarme gehen materialeinheitlich und einstückig in das Kopfteil über. Gleiches trifft auch auf die aus der EP 1 584 521 A2 bekannte Befestigungsanordnung. Aus der DE 20 2007 004 549 U1 ist ein weiteres Befestigungselement bekannt, bei dem nicht das Kopfteil, sondern die gegenüberliegende Schaftspitze durch eine Grundplatte gebildet ist. Von dieser geschlossenen Schaftspitze erstrecken sich Blechstreifen bis zum Kopfteil des Befestigungselementes und übergreifen dabei den Öffnungsrand der Trägerwand-Montageöffnung.

Sämtliche daraus bekannte Befestigungselemente sind jeweils als Blechstanzteile hergestellt, die elastisch biegbare Rastschenkel aufweisen, die mit der Montageöffnung der Trägerwand verrastet sind. Die Enden dieser Rastschenkel umgreifen dabei den Öffnungsrand der Montageöffnung.

Beim Auslösen des Airbags wird die Befestigungsanordnung einer starken mechanischen Beanspruchung ausgesetzt. Dadurch kann sich das in der Montageöffnung eingesetzte Befestigungselement derart verformen, dass sich deren Rastschenkel unbeabsichtigt vom Öffnungsrand der Montageöffnung der Trägerwand lösen.

Die Aufgabe der Erfindung besteht darin, eine Befestigungsanordnung zur Befestigung eines Bauteils, insbesondere eines Airbags, an einer Trägerwand eines Fahrzeugs bereitzustellen, die auch bei mechanischer Beanspruchung eine betriebssichere Befestigung des Bauteils an der Trägerwand ermöglicht.

Die Aufgabe ist durch die Merkmale des Patentanspruches 1 oder des Patentanspruches 10 gelöst. Bevorzugte Weiterbildungen der Erfindung sind in den abhängigen Ansprüchen offenbart.

Gemäß dem kennzeichnenden Teil des Patentanspruches 1 ist das Kopfteil des Befestigungselementes durch eine gemeinsame Grundplatte bzw. einen Grundkörper gebildet, der seitlich in davon abgewinkelte Schaftarme übergeht. Die Schaftarme des Schaftteils sind daher allesamt an der gemeinsamen Grundplatte angeformt. Dadurch ergibt sich im Bereich des Kopfteiles des Befestigungselementes ein formstabiler Korpus, der auch bei Querbewegungen des Befestigungselementes innerhalb der Montageöffnung formstabil verbleibt. Selbst bei mechanischer Beanspruchung weist das erfindungsgemäße Befestigungselement daher ausreichende Steifigkeit auf, um ein unbeabsichtigtes Lösen der Rastverbindung zu vermeiden.

Gemäß Vorbeschreibung wird das Schaftteil des Befestigungselementes durch einzelne Schaftarme gebildet, die vom Grundkörper abragen. Jeder dieser Schaftarme kann eine nach außen gewandte Anschlagwand aufweisen, die zumindest teilweise in die Montageöffnung der Trägerwand einragt. Bei Querbewegungen des Befestigungselementes in Folge mechanischer Beanspruchung stoßen diese Anschlagwände gegen den Öffnungsrand der Montageöffnung, während die eigentliche Rastverbindung zwischen dem Befestigungselement und der Trägerwand ohne Kraftbeaufschlagung verbleibt. Einer mechanischen Verformung der Rastschenkel des Befestigungselementes kann somit weiter entgegengewirkt werden.

Die das Schaftteil bildenden Schaftarme können an gegenüberliegenden Seiten der Grundplatte bzw. des Grundkörpers angeformt sein. Die Grundplatte kann im Wesentlichen rechteckförmig gestaltet sein, wobei die Grundplatte an den gegenüberliegenden Seitenkanten durch die Schaftarme verlängert sein kann. Zur weiteren Aussteifung des oben genannten Korpus sind die Schaftarme, insbesondere deren Anschlagwände, mittels Versteifungsstege gegeneinander abgestützt. Auf diese Weise erhält das Befestigungselement eine geschlossene Rahmenstruktur, deren Außenseiten dem Öffnungsrand der Montageöffnung jeweils gegenüberliegen.

Im Unterschied zur Erfindung ist im Stand der Technik nicht das Kopfteil, sondern die gegenüberliegende Schaftspitze durch eine Grundplatte gebildet. Von dieser geschlossenen Schaftspitze erstrecken sich Blechstreifen bis zum Kopfteil des Befestigungselementes und übergreifen dabei den Öffnungsrand der Montageöffnung. Dadurch ist im Gegensatz zur Erfindung nicht das Kopfteil ausgesteift, sondern vielmehr die Schaftspitze. Die am Öffnungsrand gehalterten Endstücke der Blechstreifen sind demgegenüber im Stand der Technik bei mechanischer Beanspruchung einem großen Bewegungsspiel unterworfen, wodurch es zu dem unbeabsichtigten Loslösen des Befestigungselementes kommen kann.

Die von der Grundplatte abragenden Schaftarme können einen Innenraum begrenzen, der von äußeren mechanischen Beanspruchungen geschützt ist. Im Innenraum des Schaftteils kann bevorzugt ein Rastelement angeordnet sein, das die Montageöffnung der Trägerwand lösbar hintergreifen kann. Bevorzugt ist das Rastelement als ein elastisch biegbarer Rastschenkel ausgebildet, der mit zumindest einem Rastvorsprung durch eine korrespondierende Ausnehmung der Schaftarme ragen kann. Auf diese Weise kann einerseits der Rastvorsprung den Rand der Montageöffnung hintergreifen, während andererseits der elastisch biegbare Rastschenkel geschützt im Innenraum des Schaftteiles angeordnet ist. Bei mechanischer Beanspruchung des Befestigungselementes kann daher der elastisch biegbare Rastschenkel nicht gegen den Öffnungsrand der Montageöffnung anstoßen, wodurch ein unbeabsichtigtes Lösen des Befestigungselementes sicher verhindert ist.

Zur Demontage des Befestigungselementes kann der oben genannte elastisch biegbare Rastschenkel einen Betätigungsabschnitt aufweisen, der ebenfalls im Innenraum des Schaftteiles angeordnet sein kann und insofern im Wesentlichen unzugänglich von außen ist.

Zur Durchführung der Demontage des Befestigungselementes kann in der Grundplatte zumindest eine Werkzeugzugangsöffnung vorgesehen werden, durch die ein Werkzeug bis zum Betätigungsabschnitt des Rastschenkels geführt werden kann.

Der elastisch biegbare Rastschenkel kann bevorzugt als Endstück des jeweiligen Schaftarmes ausgebildet sein. Das Endstück des Schaftarmes kann an der, dem Kopfteil gegenüberliegenden Schaftspitze in Richtung des Kopfteils rückgeführt werden. Der Rastschenkel verläuft damit in etwa gegenläufig zum äußeren Schaftarm innerhalb des Schaftteil-Innenraums.

Um eine betriebssichere Abstützung der Grundplatte an der Oberseite der Trägerwand zu gewährleisten, kann diese entsprechend auskragende Stützarme aufweisen, die sich auf der Trägerwand abstützen können.

Bevorzugt ist es, wenn das Befestigungselement der Befestigunganordnung einstückig aus Metall oder Kunststoff gebildet ist. Bevorzugt kann das Befestigungselement als ein Stanzbiegeteil ausgeführt sein, bei dem die gegenüberliegenden Schaftarme spiegelbildlich um jeweils zueinander parallele Biegeachsen von der Grundplatte abgestellt sind. Zur Ausbildung der Schaftspitze werden die Schaftarme um weitere zueinander parallele Biegeachse in Richtung der Grundplatte abgestellt, wodurch sich die innerhalb des Schaftteil-Innenraums befindlichen Rastschenkel ausbilden. Die Rastvorsprünge dieser Rastschenkel können über weitere Biegeachsen seitlich nach außen abgestellt werden.

Nachfolgend ist ein Ausführungsbeispiel der Erfindung anhand der beigefügten Figuren beschrieben.

Es zeigen:
- Fig. 1: in einer perspektivischen Ansicht einen Haltebügel für einen nicht gezeigten Kopfairbag und einem Befestigungselement zur Befestigung an einer nicht dargestellten Trägerwand;
- Fig. 2: das Befestigungselement in Alleinstellung;
- Fig. 3: die Befestigungsanordnung im montierten Zustand sowie in Schnittdarstellung; und
- Fig. 4: das als Blechstanzteil gebildete Befestigungselement in Abwicklung.

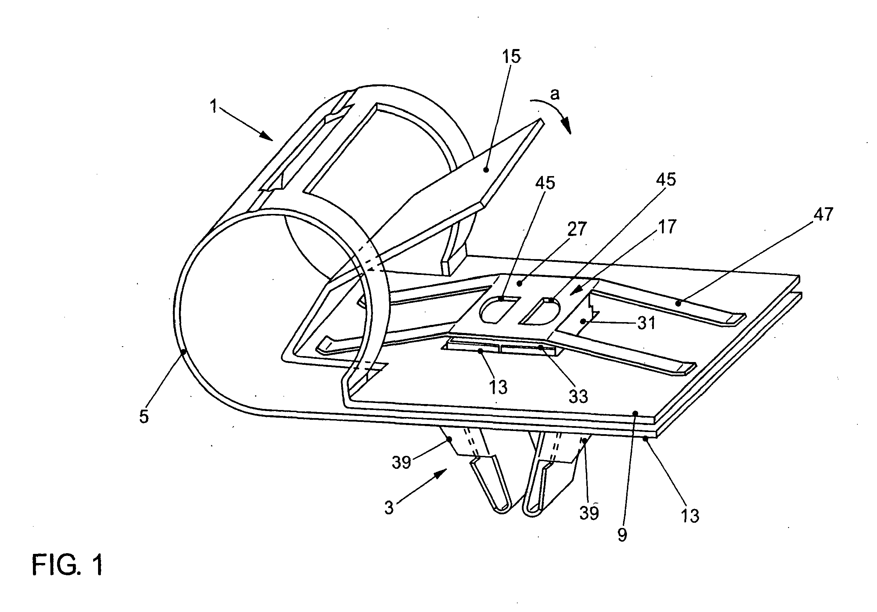

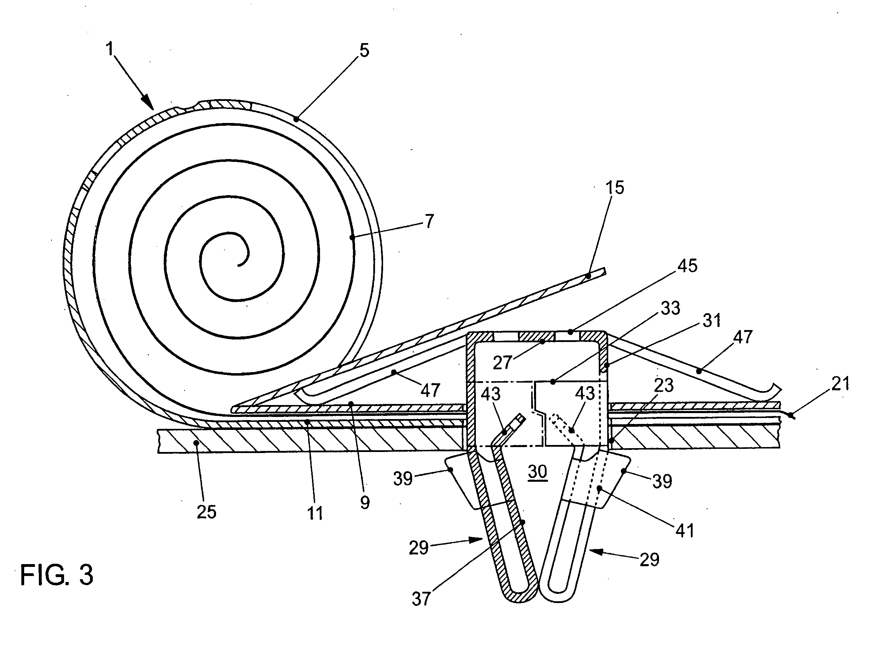

In der Fig. 1 ist ein an sich bekannter Haltebügel 1 sowie ein Befestigungselement 3 gezeigt, das als ein Blechformteil ausgebildet ist. Der Haltebügel 1 ist aus weichem Kunststoff gefertigt und weist einen Zylinderabschnitt 5 auf, der einen geteilten, in Rollfaltung aufgewickelten Kopfairbag 7 umgreift, wie er in der Fig. 3 angedeutet ist. Am Zylinderabschnitt 5 des Haltebügels sind nach außen vorstehende Befestigungsflansche 9, 11 angeformt, die mit ihren rechtwinkligen Öffnungen 13 übereinander liegen. Der Zylinderabschnitt 5 weist außerdem einen Freischnitt auf, aus dem eine V-förmige Lasche 15 herausgebogen ist. Deren schräg nach außen ragender freier Schenkel wird bei montiertem Kopfairbag 7 in der Pfeilrichtung a nach unten auf das Kopfteil 17 des Befestigungselementes 3 gedrückt. Dadurch ist Kopfteil 17 des Befestigungselementes 3 größtenteils mittels der Lasche 15 überdeckt, wodurch der Kopfairbag 7 vor Beschädigungen aufgrund scharfer Kanten des Befestigungselementes geschützt ist.

Das Befestigungselement 3 weist neben seinem Kopfteil 17 ein Schaftteil 19 auf, das in der Fig. 1 durch die einander gegenüberliegenden, rechtwinkligen Öffnungen 13 der Befestigungsflansche 9, 11 geführt ist.

Wie aus der in der Fig. 3 gezeigten Schnittdarstellung weiter hervorgeht, ist zwischen den beiden Befestigungsflanschen 9, 11 eine Stofflasche 21 des Kopfairbags 7 angeordnet, die ebenfalls von dem Schaftteil 19 des Befestigungselementes 3 durchsetzt ist. Das Schaftteil 19 des Befestigungselementes 3 ist weiter durch eine Montageöffnung 23 einer Trägerwand 25 des Kraftfahrzeuges geführt, wobei seitlich nach außen abragende Rastvorsprünge 39 des Schaftteils 19 den Rand der Montageöffnung 23 untergreifen.

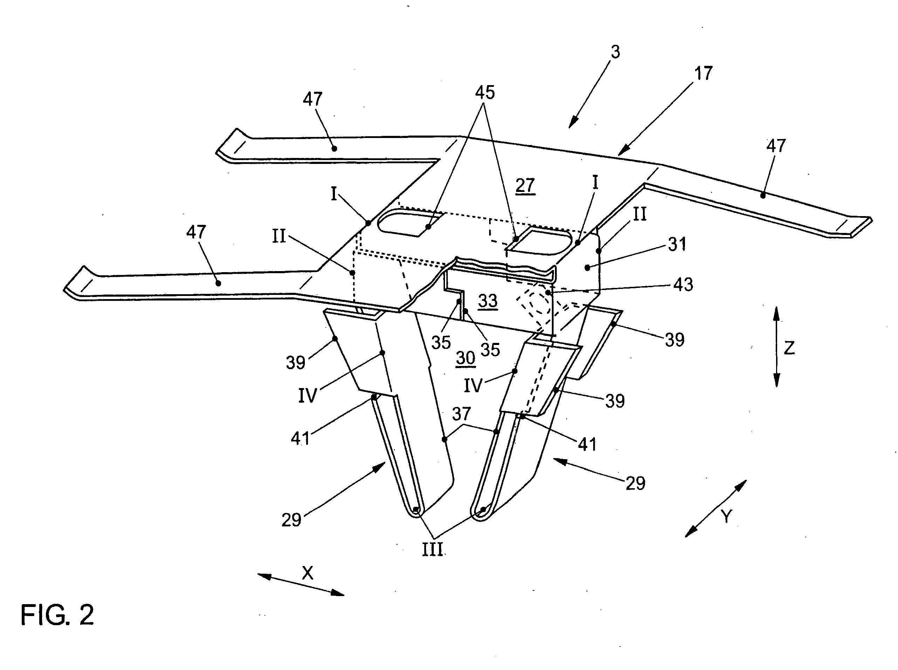

Anhand der Fig. 2 wird nachfolgend der Aufbau des Befestigungselementes 3 beschrieben. Demzufolge ist das Kopfteil 17 des Befestigungselementes 3 durch eine gemeinsame Grundplatte 27 gebildet, die als starrer Grundkörper in etwa rechtwinklig mit vier Seitenkanten ausgeführt ist. An den, in der Raumrichtung x gegenüberliegenden Seitenkanten geht die Grundplatte 27 in Schaftarme 29 über. Diese sind über zueinander parallel verlaufende Biegeachsen I rechtwinklig abgestellt. Die Schaftarme 29 bilden das Schaftteil 19 des Befestigungselementes 3. Unmittelbar am Übergang zur Grundplatte 27 weisen die beiden Schaftarme 29 jeweils Anschlagwände 31 auf. Diese ragen gemäß der Fig. 3 im montierten Zustand in die Montageöffnung 23 der Trägerwand 25 ein, und zwar mit geringfügigem Bewegungsspiel in Querrichtung. Das Befestigungselement 3 ist daher in schwimmender Lagerung in der Montageöffnung 23 der Trägerwand 25 eingesetzt. Im Falle von Querbewegungen stößt das Befestigungselement 3 mit seinen Anschlagwänden 31 gegen den Öffnungsrand der Montageöffnung 23.

Wie aus der Fig. 2 weiter hervorgeht, sind die Anschlagwände 31 der beiden Schaftarme 29 in der Seitenrichtung x über Versteifungsstege 33 verlängert. Diese sind mit ihren einander zugewandten Kanten 35 in Stoßverbindung, wodurch sich die Schaftarme 29 in der Seitenrichtung x gegeneinander abstützen können. Auf diese Weise ist zusammen mit den Anschlagwänden 31 und der kopfseitigen Grundplatte 27 ein äußerst formstabiler Korpus bereitgestellt, der auch bei mechanischer Beanspruchung formstabil innerhalb der Montageöffnung 23 verbleibt. Die Versteifungsstege 33 sind jeweils über weitere Biegeachsen II von den Anschlagwänden 31 in etwa rechtwinklig abgestellt.

Im weiteren Verlauf nach unten sind die Schaftarme 29 bis zur Schaftspitze verlängert. Im Bereich der Schaftspitze sind die Endstücke der Schaftarme 29 um dritte Biegeachsen III nach innen eingezogen und in Richtung auf die Grundplatte 27 nach oben gebogen. Die nach oben gebogenen Endstücke bilden dabei elastisch biegbare Rastschenkel 37, die sich in dem zwischen den Schaftarmen 29 begrenzten Innenraum 30 erstrecken. Im Unterschied zum Stand der Technik ist daher das Befestigungselement 3 an der Schaftspitze offen gestaltet und am Kopfteil 17 durch die Grundplatte 27 geschlossen.

Jeder der im Innenraum 30 angeordneten Rastschenkel 37 weist die seitlichen Rastvorsprünge 39 auf, die um vierte Biegeachsen IV in etwa um 90° von den elastischen Rastschenkeln 37 abgestellt sind. Die abgestellten Rastvorsprünge 39 ragen gemäß der Fig. 2 durch seitliche Ausnehmungen 41, die jeweils in die Seitenkanten der Schaftarme 29 eingearbeitet sind.

In weiterer Verlängerung sind an den Enden der beiden Rastschenkel 37 jeweils nach oben ragende, abgestellte Betätigungsabschnitte 43 ausgebildet. Diese sind durch korrespondierende Werkzeugzugangsöffnungen 45 in der Grundplatte 27 zugänglich. Zur Demontage des Befestigungselementes 3 ist daher eine entsprechende Zange durch die beiden Zugangsöffnungen 45 bis zu den Betätigungsabschnitten 43 im Innenraum 30 des Befestigungselementes 3 zu führen. Durch entsprechende Werkzeugbetätigung können dann die beiden Rastschenkel 37 aufeinander zubewegt werden, wodurch die Rastvorsprünge 39 außer Rasteingriff mit dem Rand der Montageöffnung 23 geraten.

Zur stabilen Abstützung weist die Grundplatte 27 seitlich abragende Stützarme 47 auf, die in Einbaulage gemäß der Fig. 3 unter Aufbau einer Federvorspannung auf der Oberseite des Befestigungsflansches 9 des Haltebügels 1 abstützt sind. Die Stützarme 47 sowie die Schaftarme 29 sind dabei über achsparallele Biegeachsen von der Grundplatte 27 abgestellt.

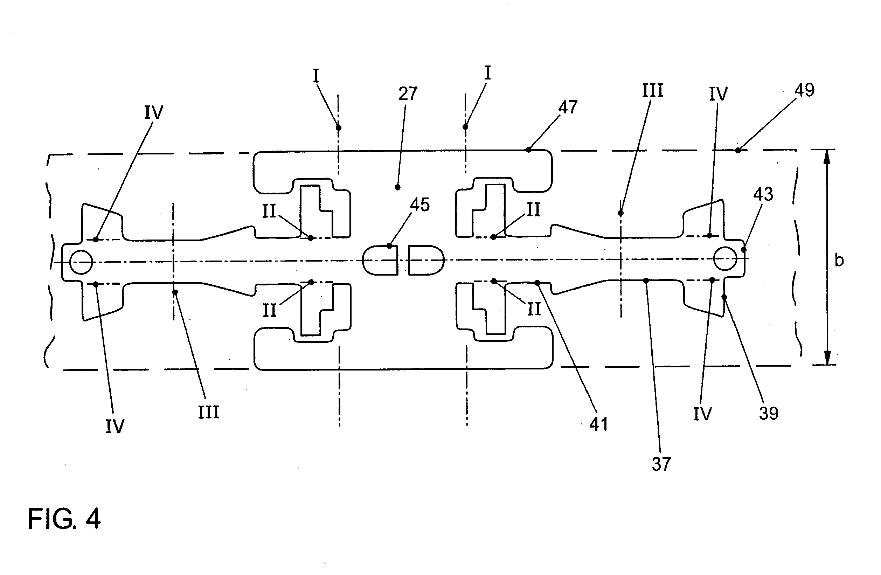

In der Fig. 4 ist das als Blechformteil gebildete Befestigungselement 3 in Abwicklung gezeigt. Demzufolge wird das Befestigungselement 3 zunächst in einem Stanzvorgang aus einer schmalen Blechplatine 49 gestanzt. Anschließend werden in einem Biegevorgang die von der zentralen Grundplatte 27 abragenden Schaftarme 29 und Stützarme 47 abgestellt. Die entsprechenden Biegeachsen I, II, III, IV sind in strichpunktierter Linie angedeutet. Wie aus der Fig. 4 hervorgeht, entspricht dabei die Breite der Blechplatine b der Breite des Befestigungselementes 3, wodurch insgesamt bei der Herstellung nur ein geringer Verschnitt anfällt.

### Bezugszeichenliste

- 1: Haltebügel
- 3: Befestigungselement
- 5: Zylinderabschnitt
- 7: Kopfairbag
- 9, 11: Befestigungsflansche
- 13: rechtwinklige Öffnung
- 15: V-förmige Lasche
- 17: Kopfteil
- 19: Schaftteil
- 21: Stofflasche
- 23: Montageöffnung
- 25: Trägerwand
- 27: Grundplatte
- 29: Schaftarme
- 30: Innenraum
- 31: Anschlagwände
- 33: Versteifungsstege
- 35: Anschlagkanten
- 37: Rastschenkel
- 39: Rastvorsprünge
- 41: Ausnehmungen
- 43: Betätigungsabschnitte
- 45: Zugangsöffnungen
- 47: Stützarme
- 49: Blechplatine
- a: Pfeilrichtung
- b: Breite
- x: Seitenrichtung
- y: Tiefenrichtung
- z: Hochrichtung
- I-IV: Biegeachsen

## Patentansprüche

1. Befestigungsanordnung zur Befestigung eines Bauteils, etwa eines Airbags (7), an einer Trägerwand (25) eines Fahrzeugs, mit einem Befestigungselement (3), das ein Kopfteil (17) und ein Schaftteil (19) aufweist, das mit Schaftarmen (29) eine Befestigungslasche (21) des Airbags (7) und eine Montageöffnung (23) der Trägerwand (25) durchsetzt und den Rand der Montageöffnung (23) hintergreift, wobei die Schaftarme (29) des Schaftteils (19) am Kopfteil (17) des Befestigungselements (3) materialeinheitlich und/oder einstückig in einen gemeinsamen Grundkörper (27) übergehen, und die Schaftarme (29) an gegenüberliegenden Seiten an dem Grundkörper (27) angeformt sind, **dadurch gekennzeichnet, dass** die Schaftarme (29), insbesondere deren Anschlagwände (31), mittels Versteifungsstege (33) gegeneinander abgestützt sind, und zwar unter Bildung einer geschlossenen Rahmenstruktur, deren Außenseiten dem Öffnungsrand der Montageöffnung (23) jeweils gegenüberliegen.

2. Befestigungsanordnung nach Anspruch 1, **dadurch gekennzeichnet, dass** jeder der Schaftarme (29) eine in die Montageöffnung (23) der Trägerwand (25) einragende Anschlagwand (31) aufweist, die bei Querbewegungen des Befestigungselements (3) innerhalb der Montageöffnung (23) gegen deren Öffnungsrand anstößt.

3. Befestigungsanordnung nach einem der vorhergehenden Ansprüche, **dadurch gekennzeichnet, dass** die von dem Grundkörper (27) abragenden Schaftarme (29) einen Innenraum (30) des Schaftteils (19) begrenzen.

4. Befestigungsanordnung nach Anspruch 3, **dadurch gekennzeichnet, dass** innerhalb des Innenraumes (30) des Schaftteils (19) zumindest ein elastisch biegbarer Rastschenkel (37) angeordnet ist, der mit zumindest einem Rastvorsprung (39) durch eine korrespondierende Ausnehmung (41) der Schaftarme (29) ragt, welcher Rastvorsprung (39) den Rand der Montageöffnung (23) hintergreift.

5. Befestigungsanordnung nach Anspruch 4, **dadurch gekennzeichnet, dass** der elastisch biegbare Rastschenkel (37) einen Betätigungsabschnitt (43) aufweist, der im Innenraum (30) des Schaftteils (29) angeordnet ist.

6. Befestigungsanordnung nach Anspruch 4 oder 5, **dadurch gekennzeichnet, dass** der elastisch biegbare Rastschenkel (37) ein Endstück eines Schaftarmes (29) ist, das an einer dem Kopfteil (17) gegenüberliegenden Schaftspitze in Richtung des Kopfteils (17) rückgeführt ist.

7. Befestigungsanordnung nach einem der Ansprüche 5 oder 6, **dadurch gekennzeichnet, dass** der Grundkörper (27) zumindest eine Werkzeugzugangsöffnung (45) aufweist, die einen Zugang zum Betätigungsabschnitt (43) des Rastschenkels (37) bereitstellt.

8. Befestigungsanordnung nach einem der vorhergehenden Ansprüche, **dadurch gekennzeichnet, dass** der Grundkörper (27) als Grundplatte ausgebildet ist und/oder zumindest einen Stützabschnitt (47) aufweist, mit dem der Grundkörper (27) auf der Oberseite der Trägerwand (25) abstützbar ist.

9. Befestigungsanordnung nach einem der vorhergehenden Ansprüche, **dadurch gekennzeichnet, dass** das Befestigungselement (3) einstückig ausgebildet ist, vorzugsweise aus Metall oder Kunststoff, und insbesondere als ein Stanzbiegeteil.

10. Befestigungselement für eine Befestigungsanordnung nach einem der vorhergehenden Ansprüche.

## Claims

1. Fastening assembly for fastening a component, for example an airbag (7), to a support wall (25) of a vehicle, with a fastening element (3) which has a head part (17) and a stem part (19) which passes both stem arms (29) through a fastening strap (21) of the airbag (7) and through a mounting opening (23) in the support wall (25) and engages behind the edge of the mounting opening (23), wherein the stem arms (29) of the stem part (19) merge on the head part (17) of the fastening element (3) in the same material and/or integrally into a common main body (27), and the stem arms (29) are moulded onto opposite sides of the main body (27), **characterized in that** the stem arms (29), in particular the stop walls (31) thereof, are supported in relation to one another by means of stiffening webs (33), specifically with the formation of a closed frame structure, the outer sides of which are in each case opposite the opening edge of the mounting opening (23).

2. Fastening assembly according to Claim 1, **characterized in that** each of the stem arms (29) has a stop wall (31) which projects into the mounting opening (23) in the support wall (25) and, in the event of transverse movements of the fastening element (3) within the mounting opening (23), strikes against the opening edge of said mounting opening.

3. Fastening assembly according to either of the preceding claims, **characterized in that** the stem arms (29) protruding from the main body (27) delimit an interior space (30) of the stem part (19).

4. Fastening assembly according to Claim 3, **characterized in that** at least one elastically bendable latching limb (37) is arranged within the interior space (30) of the stem part (19), said latching limb projecting with at least one latching projection (39) through a corresponding recess (41) of the stem arms (29), which latching projection (39) engages behind the edge of the mounting opening (23).

5. Fastening assembly according to Claim 4, **characterized in that** the elastically bendable latching limb (37) has an actuating section (43) which is arranged in the interior space (30) of the stem part (19).

6. Fastening assembly according to Claim 4 or 5, **characterized in that** the elastically bendable latching limb (37) is an end piece of a stem arm (29) which, at a stem tip opposite the head part (17), is guided back in the direction of the head part (17).

7. Fastening assembly according to either of Claims 5 and 6, **characterized in that** the main body (27) has at least one tool access opening (45) which provides access to the actuating section (43) of the latching limb (37).

8. Fastening assembly according to one of the preceding claims, **characterized in that** the main body (27) is designed as a base plate and/or has at least one supporting section (47) with which the main body (27) can be supported on the upper side of the support wall (25).

9. Fastening assembly according to one of the preceding claims, **characterized in that** the fastening element (3) is formed integrally, preferably from metal or plastic, and in particular as a punched and bent part.

10. Fastening element for a fastening assembly according to one of the preceding claims.

## Revendications

1. Agencement de fixation pour la fixation d'un composant, par exemple d'un airbag (7), sur une paroi de support (25) d'un véhicule, comprenant un élément de fixation (3) qui présente une partie de tête (17) et une partie de tige (19), qui traverse, avec des bras de tige (29), une patte de fixation (21) de l'airbag (7) et une ouverture de montage (23) de la paroi de support (25) et qui vient en prise par l'arrière avec le bord de l'ouverture de montage (23), les bras de tige (29) de la partie de tige (19) au niveau de la partie de tête (17) de l'élément de fixation (3) se prolongeant en étant venus de matière et/ou d'une seule pièce dans un corps de base commun (27), et les bras de tige (29) étant façonnés sur des côtés opposés sur le corps de base (27), **caractérisé en ce que** les bras de tige (29), en particulier leurs parois de butée (31), sont supportés l'un contre l'autre au moyen de nervures de renforcement (33) et ce en formant une structure de cadre fermée, dont les côtés extérieurs sont à chaque fois opposés au bord d'ouverture de l'ouverture de montage (23).

2. Agencement de fixation selon la revendication 1, **caractérisé en ce que** chacun des bras de tige (29) présente une paroi de butée (31) pénétrant dans l'ouverture de montage (23) de la paroi de support (25), laquelle, lors de mouvements transversaux de l'élément de fixation (3) à l'intérieur de l'ouverture de montage (23), bute contre son bord d'ouverture.

3. Agencement de fixation selon l'une quelconque des revendications précédentes, **caractérisé en ce que** les bras de tige (29) faisant saillie depuis le corps de base (27) délimitent un espace interne (30) de la partie de tige (19).

4. Agencement de fixation selon la revendication 3, **caractérisé en ce qu'**à l'intérieur de l'espace interne (30) de la partie de tige (19) est disposée au moins une branche d'encliquetage flexible élastiquement (37), qui pénètre avec au moins une saillie d'encliquetage (39) à travers un évidement correspondant (41) des bras de tige (29), laquelle saille d'encliquetage (39) vient en prise par l'arrière avec le bord de l'ouverture de montage (23).

5. Agencement de fixation selon la revendication 4, **caractérisé en ce que** la branche d'encliquetage flexible élastiquement (37) présente une portion d'actionnement (43) qui est disposée dans l'espace interne (30) de la partie de tige (19).

6. Agencement de fixation selon la revendication 4 ou 5, **caractérisé en ce que** la branche d'encliquetage flexible élastiquement (37) est un embout d'un bras de tige (29) qui est guidé en arrière au niveau d'une pointe de tige opposée à la partie de tête (17) dans la direction de la partie de tête (17).

7. Agencement de fixation selon l'une quelconque des revendications 5 ou 6, **caractérisé en ce que** le corps de base (27) présente au moins une ouverture d'accès d'outil (45) qui fournit un accès à la portion d'actionnement (43) de la branche d'encliquetage (37).

8. Agencement de fixation selon l'une quelconque des revendications précédentes, **caractérisé en ce que** le corps de base (27) est réalisé sous forme de plaque de base et/ou présente au moins une portion de support (47) avec laquelle le corps de base (27) peut être supporté sur le côté supérieur de la paroi de support (25).

9. Agencement de fixation selon l'une quelconque des revendications précédentes, **caractérisé en ce que** l'élément de fixation (3) est réalisé d'une seule pièce, de préférence en métal ou en plastique, et notamment sous la forme d'une pièce estampée-cintrée.

10. Elément de fixation pour un agencement de fixation selon l'une quelconque des revendications précédentes.
